# EUROPEAN PATENT APPLICATION

(11) **EP 4 552 481 A1**
(43) Date of publication of application: **14.05.2025**
(21) Application number: 23865029.5
(22) Date of filing: 29.06.2023
(51) Int. Cl.: A01G 31/00, A01G 7/00, A01G 7/02, A01G 9/02, A01G 9/24

(54) **TEMPERATURE CONTROL SYSTEM AND TEMPERATURE CONTROL PANEL FOR GROWING PLANTS**

(30) Priority: 15.09.2022 JP 2022147042
(71) Applicant: KABUSHIKI KAISHA KOBE SEIKO SHO (KOBE STEEL, LTD.), Hyogo 651-8585 (JP)
(72) Inventor: UEMATSU, Koji, Hyogo 651-2271 (JP); SUGIMOTO, Akio, Hyogo 651-2271 (JP)
(74) Representative: TBK
(86) International application number: PCT/JP2023/024152
(87) International publication number: WO 2024/057667

(57) **Abstract**

A temperature adjustment system (1) includes one or more rows of cultivation beds (10A to 10C) that are elongated and configured to receive a culture medium (3), and a temperature adjustment panel (20A to 20B) having a pair of main walls (31 and 32) facing each other in a thickness direction. The pair of main walls (31 and 32) define a heat medium flow path (51) through which a heat medium with a temperature higher or lower than an environmental temperature flows, and forms a contour longer than a wall thickness (t20) in a cross section. The temperature adjustment panel (20A to 20B) extends along a bed longitudinal direction of the cultivation beds (10A to 10C), and an outer surface of at least one of the pair of main walls (31 and 32) is disposed in proximity to the culture medium (3) or the plant (2).

## Description

### TECHNICAL FIELD

The present invention relates to a temperature adjustment system and a temperature adjustment panel for plant growth.

### BACKGROUND ART

Patent Document 1 and Patent Document 2 disclose a growth system that includes a water pipe through which a heat medium flows to adjust a temperature around a plant or a culture medium. For example, the root of a seedling of a plant such as strawberry is laid on an outer surface of the water pipe, which promotes a growth of the plant.

### PRIOR ART DOCUMENT

### PATENT DOCUMENT

Patent Document 1: JP-A-2017-148020
Patent Document 2: JP-A-2017-153471

### SUMMARY OF THE INVENTION

### PROBLEMS TO BE SOLVED BY THE INVENTION

In the above device, since a region in which a temperature can be adjusted is limited to be local, there is a limit to the variety of plants to be promoted to grow. In this respect, there is room for improvement in the device.

An object of the present disclosure is to provide a temperature adjustment system and a temperature adjustment panel that contribute to a growth of a wider variety of plants.

### SOLUTIONS TO THE PROBLEMS

An aspect of the present disclosure provides a temperature adjustment system for plant growth, the system assisting growth of a plant to be planted in a culture medium, the system including one or more rows of cultivation beds that are elongated and configured to receive the culture medium, and a temperature adjustment panel that has a panel shape with a wall thickness and in which a heat medium flow path is formed, through the heat medium flow path a heat medium flowing, the heat medium having a temperature higher or lower than an environmental temperature, wherein the temperature adjustment panel has a pair of main walls facing each other in a thickness direction of the temperature adjustment panel, the pair of main walls form a contour longer than the wall thickness in a cross section, and the temperature adjustment panel extends along a bed longitudinal direction of the cultivation beds, and an outer surface of at least one of the pair of main walls are disposed in proximity to the culture medium or the plant.

In the above configuration, the temperature adjustment panel has the pair of main walls that define the heat medium flow path through which the heat medium flows. The pair of main walls form a contour that is longer than the wall thickness in the cross section (that is, a cross section orthogonal to a longitudinal direction), and thus has the outer surface having a relatively large area. The outer surface has a substantially equal temperature to the heat medium due to solid thermal conductivity with the heat medium. The outer surface is disposed in proximity to the culture medium or the plant. This makes it possible to adjust the temperature in a wide area around the culture medium and the plant. Compared with a system in which the temperature is locally adjusted in a limited manner, such as the root of a seedling, the present system can be applied to the growth of a wider variety of plants.

The one or more rows of cultivation beds may include a plurality of rows of the cultivation beds, the temperature adjustment panel may be disposed between two rows of cultivation beds adjacent to each other in a bed width direction among the plurality of rows of cultivation beds, or one row of the cultivation beds may be disposed between two of the temperature adjustment panels in the bed width direction, and the thickness direction of the temperature adjustment panel may be oriented in the bed width direction, and the pair of main walls may extend in the bed longitudinal direction and a vertical direction.

As a result, the temperature is adjusted in a wide region around the culture medium in the cultivation beds. The growth of a wide variety of plants can be assisted.

The outer surface of the at least one of the pair of main walls may have light diffusivity or light reflectivity.

As a result, the plant can be irradiated with light diffused or reflected by the temperature adjustment panel, and photosynthesis is promoted. In addition, an insect pest repelling light can be kept away from the plant and the culture medium.

The temperature adjustment panel may constitute a bottom of the cultivation beds.

Therefore, the temperature of the culture medium can be easily adjusted. The growth of a wide variety of plants can be assisted.

The temperature adjustment panel may have a receiver configured to receive the culture medium in a liquid state.

Thus, the temperature of the culture medium in a liquid state can be adjusted.

The temperature adjustment panel may have a vertical wall portion extending upward from one end of the receiver and being in proximity to the plant.

As a result, the temperature of the culture medium in a liquid state can be adjusted by the receiver, and the temperature around the plant extending upward from the culture medium can be adjusted by the vertical wall portion.

The temperature adjustment panel may include a gas flow path that is provided independently of the heat medium flow path and through which a gas containing carbon dioxide flows, and the outer surface of the at least one of the pair of main walls may be provided with an ejection port ejecting the gas in the gas flow path toward the plant.

Accordingly, photosynthesis of the plant can be promoted.

The temperature adjustment panel may form a plurality of the heat medium flow paths extending in parallel to each other.

Thus, the temperature can be easily adjusted in a wide range.

The plurality of heat medium flow paths may be arranged between the pair of main walls along the contour of the cross section of the main walls.

As a result, the wall thickness can be reduced as much as possible to increase an area of the outer surfaces of the pair of main walls.

The plurality of heat medium flow paths may extend in the bed longitudinal direction.

Accordingly, the temperature can be adjusted over a wide range of the culture medium.

The plurality of heat medium flow paths may include one or more first heat medium flow paths through which the heat medium flows in one direction and one or more second heat medium flow paths through which the heat medium flows in a direction opposite to the one direction.

As a result, the temperature can be easily adjusted uniformly in the bed longitudinal direction.

The first heat medium flow paths and the second heat medium flow paths may be alternately arranged along the cross section of the pair of main walls.

As a result, the temperature can be easily adjusted uniformly in a direction in which the heat medium flow paths are arranged.

The plurality of heat medium flow paths may extend in a direction transverse to the bed longitudinal direction.

As a result, the temperature can be easily adjusted uniformly in the bed longitudinal direction.

The temperature adjustment panel may include a body having a hollow portion constituting the heat medium flow path, the body being formed by using an extruded material.

It is therefore possible to easily provide the temperature adjustment panel.

The temperature adjustment panel further may include a pair of headers that close an opening of the hollow portion at each of both ends of the extruded material, and the pair of headers may be provided with an inflow port that allows the heat medium to flow into the heat medium flow path and an outflow port that allows the heat medium to flow out from the heat medium flow path.

As a result, it is possible to easily provide the temperature adjustment panel having the heat medium flow path sealed by using the extruded material.

An aspect of the present disclosure provides a temperature adjustment panel for plant growth, the temperature adjustment panel assisting growth of a plant to be planted in a culture medium received by one or more rows of cultivation beds extending in a bed longitudinal direction, the temperature adjustment panel including a body that has a panel shape with a wall thickness and in which a heat medium flow path is provided, through the heat medium flow path a heat medium flowing, the heat medium having a temperature higher or lower than an environmental temperature, wherein the body constitutes a bottom of the cultivation beds, and an outer surface of one of a pair of main walls constitutes an inner bottom surface of the cultivation beds.

As a result, the temperature of the culture medium can be easily adjusted, and the growth of a wide variety of plants can be assisted.

### EFFECTS OF THE INVENTION

The present disclosure can provide a temperature adjustment system that contributes to a growth of a wider variety of plants.

### BRIEF DESCRIPTION OF THE DRAWINGS

[Fig. 1] Fig. 1 shows a perspective view of an agricultural house to which a temperature adjustment system according to a first embodiment of the present invention is applied.
[Fig. 2] Fig. 2 shows a perspective view of a temperature adjustment panel according to the first embodiment.
[Fig. 3] Fig. 3 shows an exploded perspective view of a temperature adjustment panel according to the first embodiment.
[Fig. 4] Fig. 4 shows a cross sectional view of the temperature adjustment panel and a cultivation bed according to the first embodiment.
[Fig. 5] Fig. 5 shows a longitudinal sectional view of the temperature adjustment panel according to the first embodiment.
[Fig. 6] Fig. 6 shows a system diagram showing a flow of a heat medium in the temperature adjustment system according to the first embodiment.
[Fig. 7A] Fig. 7A shows an exploded perspective view of a temperature adjustment panel according to a second embodiment of the present invention.
[Fig. 7B] Fig. 7B shows a longitudinal sectional view of the temperature adjustment panel according to the second embodiment.
[Fig. 7C] Fig. 7C shows a system diagram showing a flow of a heat medium in a temperature adjustment system according to the second embodiment.
[Fig. 8A] Fig. 8A shows an exploded perspective view of a temperature adjustment panel according to a third embodiment.
[Fig. 8B] Fig. 8B shows a longitudinal sectional view of the temperature adjustment panel according to the third embodiment.
[Fig. 8C] Fig. 8C shows a system diagram showing a flow of a heat medium in a temperature adjustment system according to the third embodiment.
[Fig. 9] Fig. 9 shows a system diagram showing a flow of a heat medium in a temperature adjustment system according to a fourth embodiment.
[Fig. 10] Fig. 10 shows a system diagram showing a flow of a heat medium in a temperature adjustment system according to a fifth embodiment.
[Fig. 11A] Fig. 11A shows a cross sectional view of a temperature adjustment panel and a cultivation bed according to a sixth embodiment.
[Fig. 11B] Fig. 11B shows a cross sectional view of a temperature adjustment panel and a cultivation bed according to a seventh embodiment.
[Fig. 11C] Fig. 11C shows a cross sectional view of a temperature adjustment panel and a cultivation bed according to an eighth embodiment.
[Fig. 12A] Fig. 12A shows a cross sectional view of a temperature adjustment panel and a cultivation bed according to a ninth embodiment.
[Fig. 12B] Fig. 12B shows a cross sectional view of a temperature adjustment panel and a cultivation bed according to a tenth embodiment.
[Fig. 13A] Fig. 13A shows a cross sectional view of a temperature adjustment panel and a cultivation bed according to an eleventh embodiment.
[Fig. 13B] Fig. 13B shows a cross sectional view of a temperature adjustment panel and a cultivation bed according to a twelfth embodiment.
[Fig. 14A] Fig. 14A shows a cross sectional view of a temperature adjustment panel and a cultivation bed according to a thirteenth embodiment.
[Fig. 14B] Fig. 14B shows a cross sectional view of a temperature adjustment panel and a cultivation bed according to a fourteenth embodiment.
[Fig. 15A] Fig. 15A shows a cross sectional view of a temperature adjustment panel and a cultivation bed according to a fifteenth embodiment.
[Fig. 15B] Fig. 15B shows a cross sectional view of a temperature adjustment panel and a cultivation bed according to a sixteenth embodiment.
[Fig. 16A] Fig. 16A shows a cross sectional view of a temperature adjustment panel and a cultivation bed according to a seventeenth embodiment.
[Fig. 16B] Fig. 16B shows a cross sectional view of a temperature adjustment panel and a cultivation bed according to an eighteenth embodiment.
[Fig. 17A] Fig. 17A shows a cross sectional view of a temperature adjustment panel and a cultivation bed according to a nineteenth embodiment.
[Fig. 17B] Fig. 17B shows a cross sectional view of a temperature adjustment panel and a cultivation bed according to a twentieth embodiment.

### DETAILED DESCRIPTION

Hereinafter, embodiments of the present invention will be described with reference to the drawings.

### (First Embodiment)

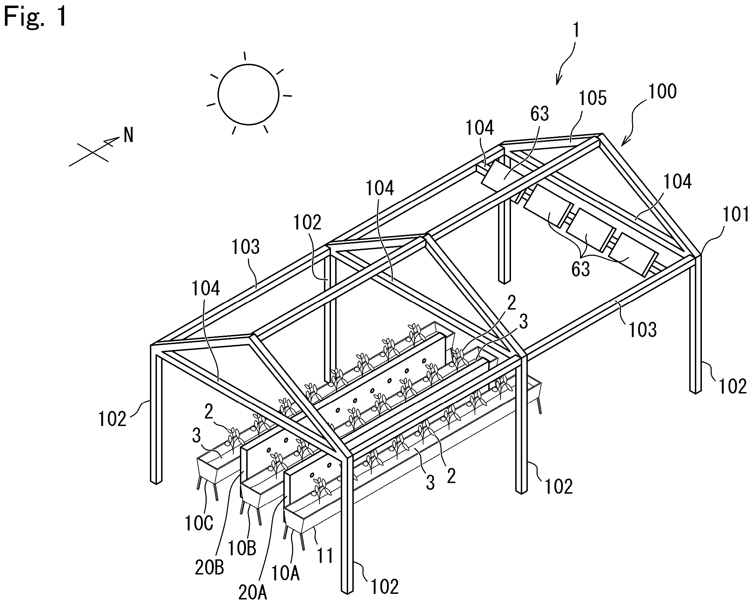

Referring to Fig. 1, a temperature adjustment system 1 according to a first embodiment is used for assisting a growth of a plant 2. The plant 2 is preferably a crop (agricultural crop such as feed crop, horticultural crop, and craft crop). The temperature adjustment system 1 adjusts an ambient temperature of the plant 2 and a culture medium 3 in which the plant 2 is planted. The temperature is more effectively adjustable in a closed environment, and the temperature adjustment system 1 is suitably applied to a closed environment such as an agricultural house 100. The plant 2 is also suitable as long as being suitable for house cultivation, and in this respect, general crops and horticultural crops are preferable examples among agricultural crops. The general crops include wheat and barley, rice, potatoes, and beans. The horticultural crops include vegetables, fruit trees, and flowers. The culture medium 3 is a growth medium of the plant 2. The culture medium 3 is appropriately selected from soil, rock wool, a culture solution, and the like in consideration of compatibility with the plant 2 to be cultivated.

The agricultural house 100 is constructed in a substantially horizontal rectangular site. The agricultural house 100 has a framework 101 formed by using a steel material or an aluminum extruded material. The entire framework 101 is covered with an outer skin (not shown) formed by using a light transmissive material (for example, polyvinyl chloride). Accordingly, an interior of the agricultural house 100 is protected from wind and rain.

The framework 101 includes columns 102 erected at four corners of the site and in between the corners, a pair of girders 103 laterally bridged over upper ends of the columns 102, a plurality of beams 104 laterally bridged between the girders 103, and a roof truss 105 provided on the girders 103 and the beams 104. The shape of a roof is not limited, and is, for example, a gable or an arch. The long sides of the site and the girders 103 are oriented north and south, and the short sides of the site and the beams 104 are oriented east and west. Hereinafter, a direction in which the girders 103 extend is referred to as a "girder direction", and a direction in which the beams 104 extend is referred to as a "beam direction".

The temperature adjustment system 1 includes a plurality of rows of cultivation beds 10A, 10B, and 10C and one or more temperature adjustment panels 20A and 20B. The cultivation beds 10A, 10B, and 10C and the temperature adjustment panels 20A and 20B are installed in the agricultural house 100. The number of rows of the cultivation beds 10A, 10B, and 10C is not limited to three, and may be one or plural other than three.

Each of the cultivation beds 10A, 10B, and 10C has an elongated rectangular shape in plan view. Hereinafter, a longitudinal direction of the cultivation beds 10A, 10B, and 10C is referred to as a "bed longitudinal direction", and a direction orthogonal to the bed longitudinal direction is referred to as a "bed width direction".

Each of the cultivation beds 10A, 10B, and 10C is configured to receive the culture medium 3. In the present embodiment, the culture medium 3 is soil. In each of the cultivation beds 10A, 10B, and 10C, a plurality of plants 2 are planted in the culture medium 3 at intervals in the bed longitudinal direction.

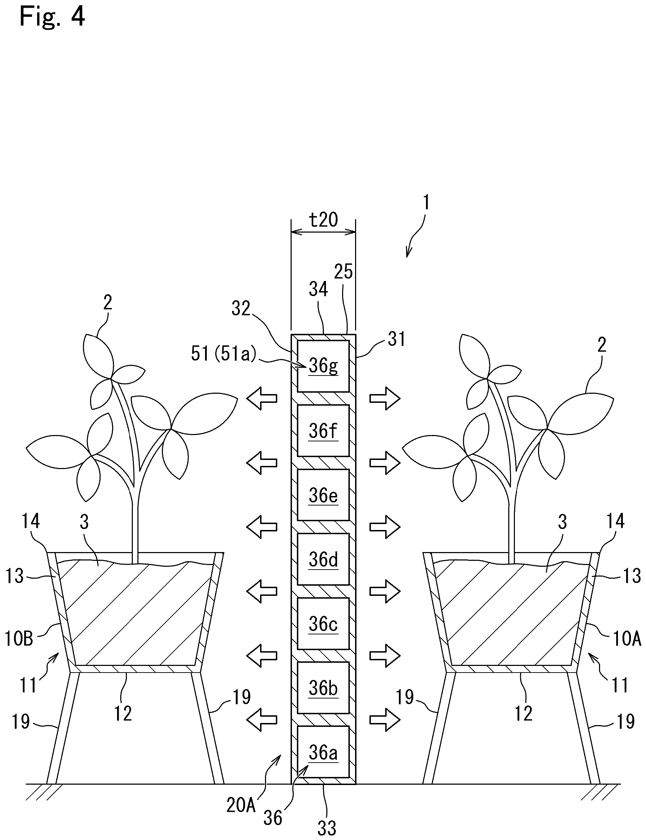

The cultivation bed 10A may have any structure as long as being able to receive the required culture medium 3. Referring also to Fig. 4, as an example, the cultivation bed 10A includes a container 11. The container 11 has a bottom wall 12 and a peripheral wall 13 erected from a periphery of the bottom wall 12, and the bottom wall 12 and the peripheral wall 13 form a receiver 14 that receives the culture medium 3. The receiver 14 is opened upward. The cultivation bed 10A is supported on the site of the agricultural house 100 with a leg 19 interposed therebetween, the leg 19 extending downward from the bottom wall 12. The culture medium 3 is received in the receiver 14 from above. A material of the cultivation bed 10A is not limited. The same applies to the other cultivation beds 10B and 10C.

Each of the cultivation beds 10A, 10B, and 10C is installed in the agricultural house 100 in such an orientation that the bed longitudinal direction faces the girder direction. The plurality of rows of cultivation beds 10A, 10B, and 10C extend in parallel to each other, and are arranged at intervals in the beam direction or the bed width direction.

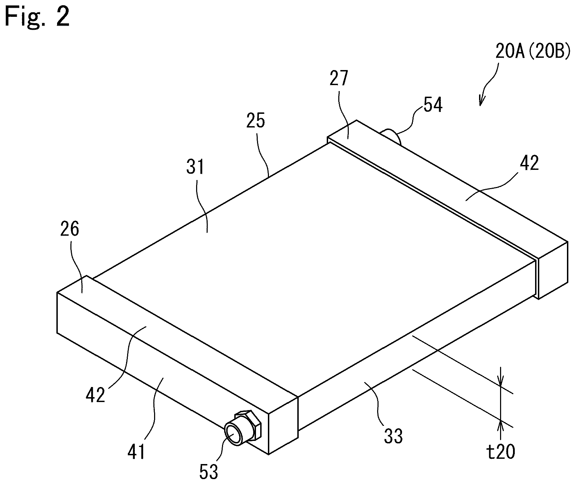

Referring to Figs. 1 and 2, the temperature adjustment panels 20A and 20B have a panel shape with a wall thickness t20 (see Fig. 4). In the present embodiment, the temperature adjustment panels 20A and 20B each have a flat rectangular panel shape and are independent from the cultivation beds 10A, 10B, and 10C.

In this case, the temperature adjustment panels 20A and 20B are disposed between two rows adjacent to each other in the bed width direction among the plurality of rows of cultivation beds 10A, 10B, and 10C. The temperature adjustment panel 20A is disposed between cultivation beds 10A and 10B, and the temperature adjustment panel 20B is disposed between the cultivation beds 10B, and 10C. In other words, the cultivation bed 10B at a center is disposed between the two temperature adjustment panels 20A and 20B in the bed width direction.

A thickness direction of the temperature adjustment panels 20A and 20B is oriented in the bed width direction (beam direction). A panel longitudinal direction of the temperature adjustment panels 20A and 20B is oriented in the bed longitudinal direction (girder direction). A panel width direction of the temperature adjustment panels 20A and 20B is oriented in a vertical direction.

The structure of the temperature adjustment panel 20A will be described with reference to Figs. 2 to 5. Since the temperature adjustment panels 20A and 20B have the same structure, the description of the temperature adjustment panel 20B will be omitted.

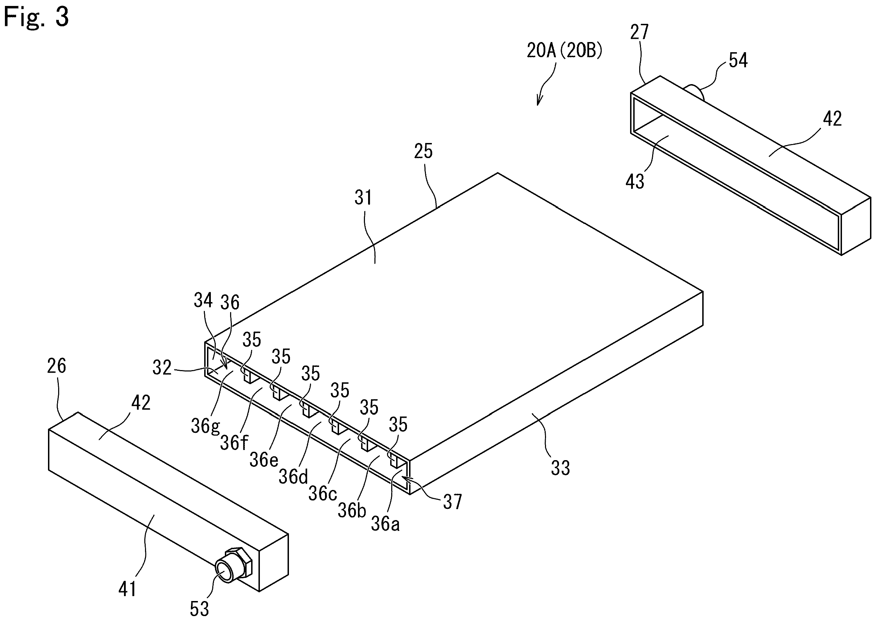

As shown in Figs. 2 and 3, the temperature adjustment panel 20A includes a body 25 and a pair of headers 26 and 27 (first header 26 and second header 27).

The body 25 is an extruded material of a metal material, and the panel longitudinal direction is an extrusion direction. The metal material may be any material as long as being usable for extrusion molding, and examples of the metal material include aluminum, an aluminum alloy, silver, and a copper alloy. In the present embodiment, the body 25 is formed of an aluminum alloy.

The body 25 includes a pair of main walls 31 and 32, a pair of end walls 33 and 34, and a plurality of partition walls 35. The main walls 31 and 32 face each other in the thickness direction of the temperature adjustment panels 20A and 20B. Each of the main walls 31 and 32 has a rectangular shape in a side view, and extends in the panel longitudinal direction and the panel width direction orthogonal to the panel longitudinal direction and the thickness direction. The wall thickness t20 is a distance between outer surfaces of the pair of main walls 31 and 32.

The end walls 33,34 extend in the panel longitudinal direction and in the thickness direction. The end wall 33 connects one ends of the pair of main walls 31 and 32 in the panel width direction, and the end wall 34 connects the other ends of the pair of main walls 31 and 32. The body 25 forms a hollow portion 36 surrounded by the main walls 31 and 32 and the end walls 33 and 34. The hollow portion 36 opens at both ends of the body 25 in the panel longitudinal direction.

The plurality of partition walls 35 are disposed in the hollow portion 36 at intervals in the panel width direction, and extend in parallel to each other in the panel longitudinal direction. Each of the partition walls 35 is joined to an inner surface of the main wall 31 at one end in the thickness direction, and is joined to an inner surface of the main wall 32 at the other end in the thickness direction. The plurality of partition walls 35 divide the hollow portion 36 into a plurality of long holes 36a to 36g arranged in the panel width direction. That is, the body 25 includes an extruded material having a multi-chamber structure. Each of the long holes 36a to 36g is defined by inner surfaces of the pair of main walls 31 and 32 and two adjacent inner surfaces among the pair of end walls 33 and 34 and the plurality of partition walls 35. The number of the long holes 36a to 36g is larger by one than the number of the partition walls 35. In this example, the number of the long holes 36a to 36g is seven, but can be appropriately changed.

As shown in Fig. 4, the main walls 31 and 32 form a contour longer than the wall thickness t20 in a cross section (cross section orthogonal to the panel longitudinal direction). In the present embodiment, the main walls 31 and 32 have a flat plate shape, and the body 25 has a flat rectangular panel shape. In the cross section, the contour of the main walls 31 and 32 is a straight linear shape. Expressed more precisely two-dimensionally in consideration of a plate thickness of the main walls 31 and 32, the contour is a thin rectangular shape. The length of the contour compared with the wall thickness t20 may be defined as a total length of the contour, or may be defined as a distance from one end to the other end of the contour in the panel width direction. In the present embodiment, since the contour has a straight linear shape extending in a direction orthogonal to the thickness direction, the definitions are the same.

Thus, the contour of the main walls 31 and 32 is longer than the wall thickness t20. The main walls 31 and 32 and thus the temperature adjustment panel 20A are long with respect to the thickness direction in the panel width direction, and the temperature adjustment panel 20A has a wall shape or a panel shape rather than a circular tube shape or an angular tube shape. An aspect ratio of the cross section of the body 25 is a value greatly different from one. The lengths of the main walls 31 and 32 in the panel longitudinal direction are longer than the length of the contour in the cross section of the main walls 31 and 32.

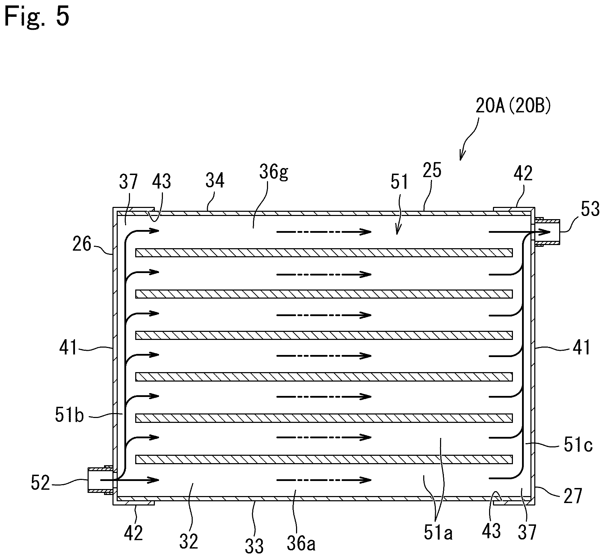

As shown in Figs. 3 and 5, the first header 26 is attached to one end of the body 25 in the panel longitudinal direction, and closes an opening on one end side of the hollow portion 36. The second header 27 is attached to the other end of the body 25 in the panel longitudinal direction, and closes an opening on the other end side of the hollow portion 36.

The first header 26 includes a lid plate 41, a peripheral wall 42 erected from a peripheral edge of the lid plate 41, and a depression 43 surrounded by the lid plate 41 and the peripheral wall 42, and the depression 43 is opened on a side opposite to the lid plate 41. A section of the depression 43 (a section of an inner peripheral surface of the peripheral wall 42) has the same shape (in the present embodiment, a rectangular shape) as a section of an outer peripheral surface of the body 25. The first header 26 is externally fitted to one end of the body 25 and is liquid-tightly joined to the body 25. In a state of being attached to the body 25, an inner surface of the lid plate 41 is brought into surface contact with a rectangular window frame-shaped end surface of one end of the body 25. The second header 27 is configured similarly to the first header 26, and is attached to the other end of the body 25 in the panel longitudinal direction similarly to the first header 26.

In the present embodiment, as for all of the partition walls 35, one end in the panel longitudinal direction is offset inward of the body 25 from the end surface of one end of the body 25, the end surface being brought into surface contact with the lid plate 41. Therefore, all the long holes 36a to 36g open inside the body 25 on one end side. The long holes 36a to 36g communicate with each other via a communication portion 37 extending in the panel width direction in the body 25 between the opening of the body 25 and the long holes 36a to 36g. The same applies to the other end in the panel longitudinal direction.

In the temperature adjustment panel 20A, a heat medium flow path 51 is formed. A heat medium , with a temperature higher or lower than an environmental temperature, flows thorough the heat medium flow path 51. Note that the environmental temperature is the temperature of an environment in which the plant 2 is disposed. In the present embodiment, as an example, the environmental temperature is a temperature at a place separated by a predetermined distance in the girder direction from the cultivation beds 10A, 10B, and 10C in the agricultural house 100, that is, a place sufficiently separated from a region where the temperature can be adjusted by the temperature adjustment panels 20A and 20B. The heat medium may be any medium as long as heat can be exchanged. For example, the heat medium may be water or an antifreeze liquid containing ethylene glycol as a main component.

The temperature adjustment panel 20A has an inflow port 52 that allows the heat medium to flow into the heat medium flow path 51 and an outflow port 53 that allows the heat medium to flow out from the heat medium flow path. In the present embodiment, the single inflow port 52 is provided in the lid plate 41 of the first header 26, and the single outflow port 53 is provided in the lid plate 41 of the second header 27. The inflow port 52 and the outflow port 53 are disposed at ends opposite to each other in the panel width direction. In the present embodiment, the panel width direction is oriented in the vertical direction in the agricultural house 100. The temperature adjustment panel 20A is installed in the agricultural house 100 in such an orientation that the inflow port 52 on a lower side and the outflow port 53 on an upper side. A nipple that connects a hose (not shown) through which the heat medium flows is fixed to the inflow port 52 and the outflow port 53.

The heat medium flows into the communication portion 37 on one end side via the inflow port 52, and further flows into the plurality of long holes 36a to 36g from the communication portion 37. The heat medium flows into the communication portion 37 on the other end side from the long holes 36a to 36g, and further flows out from the temperature adjustment panel 20A via the outflow port 53.

In this manner, the heat medium flow path 51 includes the communication portion 37 on one end side, the plurality of long holes 36a to 36g, and the communication portion 37 on the other end side. The plurality of long holes 36a to 36g constitute a plurality of individual heat medium flow paths 51a extending in the panel longitudinal direction in the temperature adjustment panel 20A. The communication portion 37 on one end side functions as a distribution flow path 51b that distributes the heat medium to each of the plurality of individual heat medium flow paths 51a. The communication portion 37 on the other end side functions as a recovery flow path 51c that recovers the heat medium from each of the plurality of individual heat medium flow paths 51a.

In the present embodiment, all the long holes 36a to 36g constitute the individual heat medium flow path 51a. In all the long holes 36a to 36g, the heat medium flows in the same direction from a first side to a second side in the panel longitudinal direction.

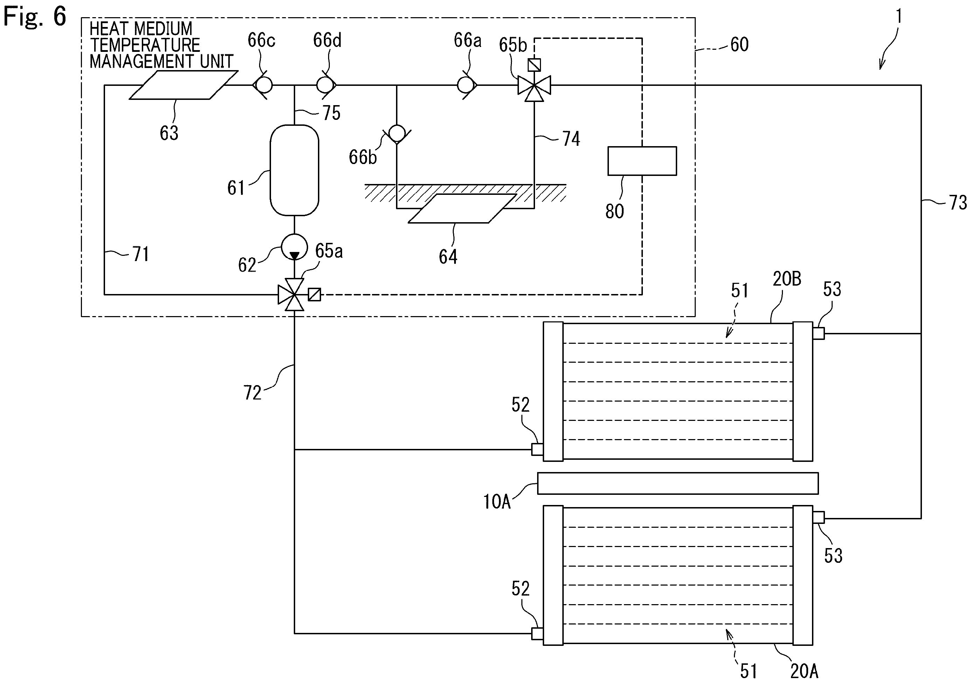

Referring to Fig. 6, the temperature adjustment system 1 includes a heat medium temperature management unit 60. The heat medium temperature management unit 60 includes a tank 61, a pump 62, a heater 63, a cooler 64, and a controller 80. The tank 61 stores the heat medium. An outlet of the tank 61 is connected to a suction port of the pump 62. The pump 62 pumps the heat medium in the tank 61 from a discharge port the pump 62. The tank 61 and the pump 62 may be disposed inside or outside of the agricultural house 100.

The discharge port of the pump 62 is connected to an inlet of the tank 61 via a heating line 71. The heater 63 is provided on the heating line 71. The heater 63 is, for example, a solar panel attached on the beam 104 of the agricultural house 100, and the heat medium flowing in the heating line 71 is heated by solar heat.

The discharge port of the pump 62 is connected in parallel to the inflow port 52 of the temperature adjustment panels 20A and 20B via a supply line 72. The outflow ports 53 of the temperature adjustment panels 20A and 20B is connected in parallel to the inlet of the tank 61 via a return line 73.

The return line 73 is provided with a cooling line 74 as a detour path. The cooler 64 is provided on the cooling line 74. As an example, the cooler 64 is a heat exchanger embedded in a ground (for example, a depth of 20 m) of the site of the agricultural house 100 or a site adjacent to the site.

In the present embodiment, the discharge port of the pump 62 is connected to an inlet of a first three-way valve 65a, and a line from the pump 62 to the first three-way valve 65a serves as both the heating line 71 and the supply line 72. The heating line 71 separates from the supply line 72 and extends from the first three-way valve 65a to the heater 63, and the supply line 72 separates from the supply line 72 and extends from the first three-way valve 65a to the temperature adjustment panels 20A and 20B. The first three-way valve 65a is switched between a heating state in which the discharge port communicates with the heating line 71 and a supply state in which the discharge port communicates with the supply line 72.

The return line 73 is provided with a second three-way valve 65b. The cooling line 74 extends from the second three-way valve 65b and terminates at a portion of the return line 73 downstream of the second three-way valve 65b. The second three-way valve 65b is switched between a direct connection state in which the outflow port 53 of the temperature adjustment panels 20A and 20B is connected to the inlet of the tank 61 without passing through the cooler 64 and a cooling state in which the outflow port 53 is connected to the inlet of the tank 61 via the cooler 64. The cooling line 74 and the return line 73 are provided with check valves 66a and 66b respectively before a junction. Accordingly, the heat medium from the cooling line 74 does not flow backward in the return line 73 and the heat medium from the return line 73 does not flow backward in the cooling line 74.

A downstream end of the heating line 71 and a downstream end of the return line 73 are merged together to form one common line 75 connected to the inlet of the tank 61. The heating line 71 and the return line 73 are provided with the check valves 66c and 66d respectively before a junction, and the heat medium does not flow from the heating line 71 toward the return line 73 or in the opposite direction.

The first three-way valve 65a and the second three-way valve 65b are solenoid valves. The controller 80 switches states of the first three-way valve 65a and the second three-way valve 65b on the basis of information necessary for control such as environmental temperature and time. As a result, the management of the flow and the temperature of the heat medium is automated. The controller 80 is provided on an operation panel (not shown) installed in the agricultural house 100.

As a mere example, in winter daytime, the controller 80 switches the first three-way valve 65a to the heating state. The state of the second three-way valve 65b is not limited. The heat medium in the tank 61 flows through the heating line 71 and returns to the tank 61. In that process, the heat medium is heated by solar heat in the heater 63. At night in winter, a heat medium whose temperature is raised during the day is stored in the tank 61. The controller 80 switches the first three-way valve 65a to the supply state and switches the second three-way valve 65b to the direct connection state. The heat medium in the tank 61 is supplied to the temperature adjustment panels 20A and 20B via the supply line 72, flows through the heat medium flow path 51 in the temperature adjustment panels 20A and 20B, and returns to the tank 61 without passing through the cooler 64 via the return line 73.

In summer, regardless of day or night, the controller 80 switches the first three-way valve 65a to the supply state and switches the second three-way valve 65b to the cooling state. The heat medium in the tank 61 is supplied to the temperature adjustment panels 20A and 20B via the supply line 72, flows through the heat medium flow path 51 in the temperature adjustment panels 20A and 20B, and flows through the return line 73. In that process, the heat medium flows through the cooling line 74 and is cooled by the cooler 64, and the heat medium after being cooled is returned to the tank 61.

Returning to Fig. 4, when the high-temperature heat medium is supplied to the temperature adjustment panels 20A and 20B at night in winter, the heat medium flows into the temperature adjustment panels 20A and 20B from below and flows out from above. When the inflow port 52 and the outflow port 53 are disposed in this manner, the heat medium is uniformly supplied to each of the plurality of individual heat medium flow paths 51a. The accumulation of air in the heat medium flow path 51 can be suppressed, and the temperature can be effectively adjusted by the temperature adjustment panels 20A and 20B.

The heat medium flows through the heat medium flow path 51 along the panel longitudinal direction, that is, the bed longitudinal direction. The outer surfaces of the pair of main walls 31 and 32 of the temperature adjustment panels 20A and 20B face the cultivation bed and the plant 2 extending upward from the cultivation bed 10 in proximity in the panel width direction or the bed width direction. The pair of main walls 31 and 32 are heated by heat conduction from the heat medium, and thus, a peripheral region of the outer surfaces is warmed. The culture medium 3 and the plant 2 exist in the peripheral region, that is, in a range where the temperature can be adjusted by the temperature adjustment panels 20A and 20B. In the cross section shown in Fig. 4, the contours of the outer surfaces of the pair of main walls 31 and 32 are longer than the wall thickness t20, and the contours extend in the vertical direction in an installed state of the temperature adjustment panels 20A and 20B. The range where the temperature can be adjusted is enlarged in the vertical direction as compared with the water pipe, and the surroundings of the plant 2 and the culture medium 3 are maintained at an appropriate temperature over a wider range. The same applies to a case of suppressing an excessive temperature rise around the plant 2 and the culture medium 3 in summer. It is thus possible to assist the promotion of the growth of a wider variety of plants 2.

The outer surfaces of the temperature adjustment panels 20A and 20B have light diffusivity or light reflectivity. In order to obtain light diffusivity or light reflectivity, as an example, the outer surfaces may be painted white or left unpainted and pure. The outer surfaces diffuse or reflect sunlight transmitted through an outer skin of the agricultural house 100, and the diffused light or the reflected light irradiates the plant 2 or the culture medium 3. As a result, an insect pest repelling light can be kept away from the plant 2 and the culture medium 3, and the growth of the plant 2 is promoted. In addition, since light is directed to the plant 2, photosynthesis of the plant 2 is promoted.

### (Second Embodiment)

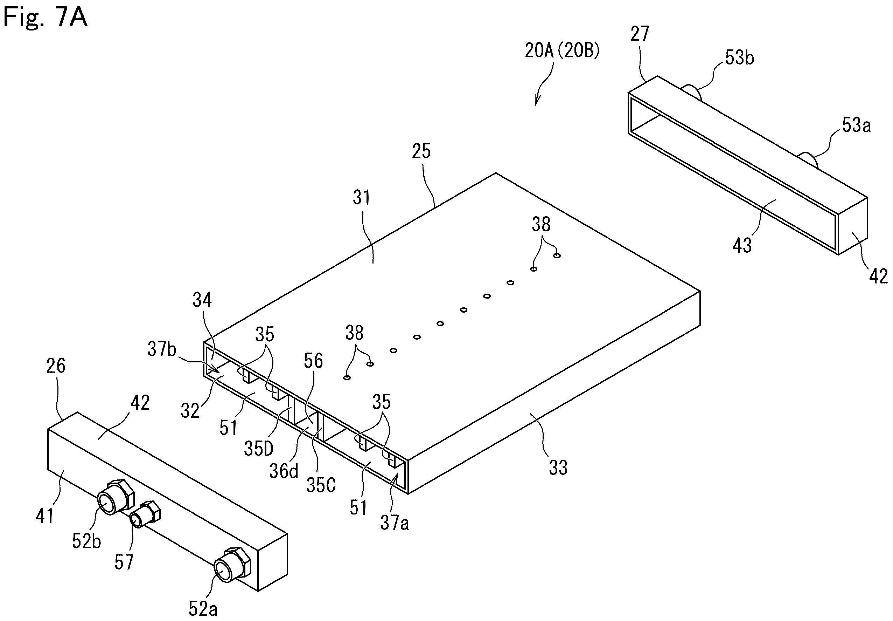

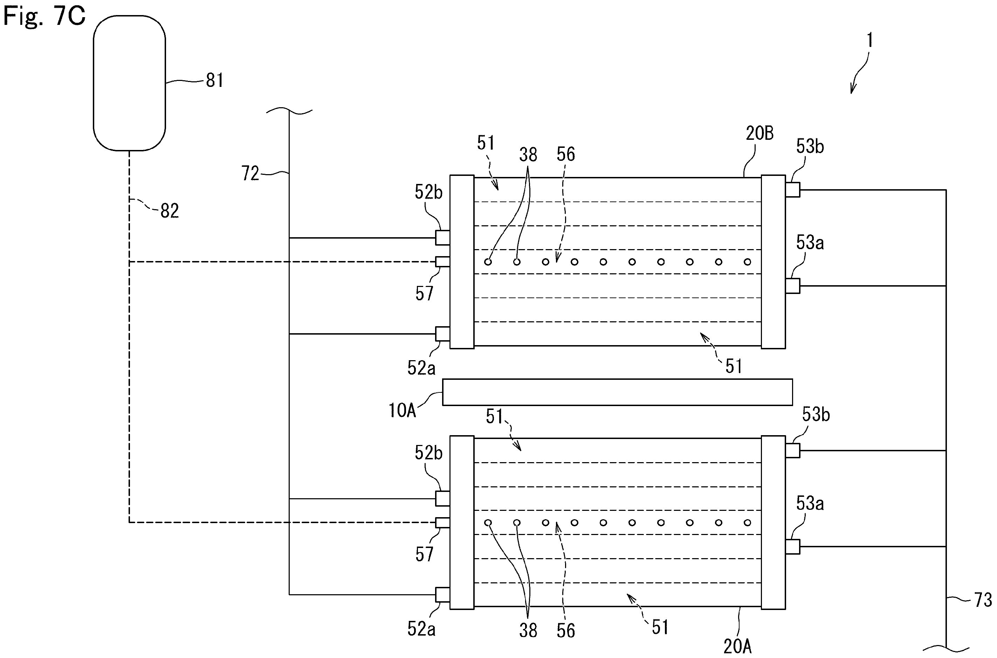

Next, a second embodiment of the present invention will be described with reference to Figs. 7A to 7C, focusing on differences from the above embodiment. Since the temperature adjustment panels 20A and 20B also have the same structure in the present embodiment, the description of the temperature adjustment panel 20B will be omitted.

One long hole 36d of the seven long holes 36a to 36g constitutes a gas flow path 56 through which a gas containing carbon dioxide flows. The remaining long holes 36a to 36c and 36e to 36g constitute the individual heat medium flow path 51a. The long hole 36d is disposed at a center among the seven long holes 36a to 36g.

As for two partition walls 35C and 35D defining the long hole 36d, one end in the panel longitudinal direction is flush with an end surface of one end of the body 25, the end surface being brought into surface contact with the lid plate 41. The other partition walls 35 are similar to the partition walls in the first embodiment. The long holes 36a to 36c communicate with each other via a first side communication portion 37a extending in the panel width direction in the body 25 between the opening of the body 25 and the long holes 36a to 36c. The long holes 36e to 36g communicate with each other via a second side communication portion 37b extending in the panel width direction in the body 25 between the opening of the body 25 and the long holes 36e to 36g. The same applies to the other end in the panel longitudinal direction.

As for two partition walls 35C and 35D defining the long hole 36d, one end in the panel longitudinal direction is flush with an end surface of one end of the body 25, the end surface being brought into surface contact with the lid plate 41. The other partition walls 35 are similar to the partition walls in the first embodiment. The long holes 36a to 36c communicate with each other via a first side communication portion 37a extending in the panel width direction in the body 25 between the opening of the body 25 and the long holes 36a to 36c. The long holes 36e to 36g communicate with each other via a second side communication portion 37b extending in the panel width direction in the body 25 between the opening of the body 25 and the long holes 36e to 36g. The same applies to the other end in the panel longitudinal direction.

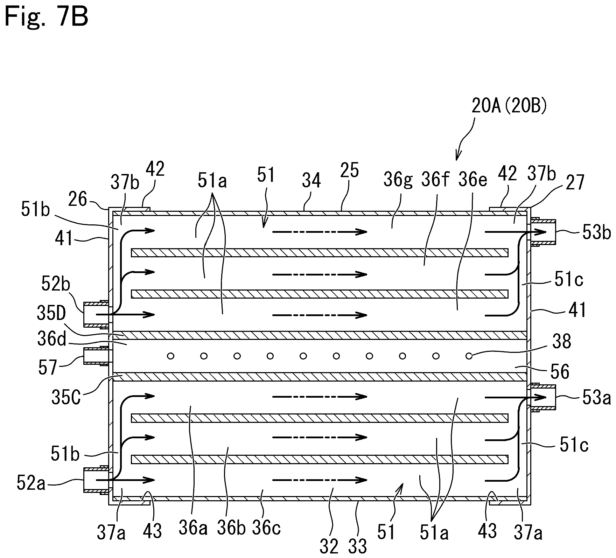

The pair of main walls 31 and 32 are provided with a plurality of ejection ports 38 that allows the long hole 36d, that is, the gas flow path 56 to communicate with the outside (see Fig. 7A for the ejection port 38 of the main wall 31, and see Fig. 7B for the ejection port 38 of the main wall 32). The plurality of ejection ports 38 are arranged at intervals in an extending direction of the gas flow path 56, that is, in the panel longitudinal direction.

The first header 26 is provided with two inflow ports 52a and 52b and one gas inflow port 57. The second header 27 is provided with two outflow ports 53a and 53b. When the pair of headers 26 and 27 are attached to the body 25, the partition walls 35C and 35D abut on the inner surface of the lid plate 41. As a result, the central long hole 36d communicates with the gas inflow port 57 and the ejection port 38, and is isolated from the other long holes 36a to 36c and 36e to 36g, the inflow ports 52a and 52b, and the outflow ports 53a and 53b.

The first inflow port 52a communicates with the first outflow port 53a via the first side communication portion 37a of the first header 26, the three long holes 36a to 36c, and the first side communication portion 37a of the second header 27. The second inflow port 52b communicates with the second outflow port 53b via the first side communication portion 37a of the first header 26, the three long holes 36e to 36g, and the first side communication portion 37a of the second header 27. The communication portions 37a and 37b of the first header 26 constitute the distribution flow path 51b, the long holes 36a to 36c, 36d, and 36e constitute the individual heat medium flow path 51a, and the communication portions 37a and 37b of the second header 27 constitute the recovery flow path 51c. The first inflow port 52a is disposed below the first outflow port 53a, and the second inflow port 52b is disposed below the second outflow port 53b. In the individual heat medium flow path 51a, the heat medium flows in the same direction. As a result, as in the first embodiment, the surroundings of the plant 2 and the culture medium 3 can be maintained at an appropriate temperature over a wide range.

The gas inflow port 57 is connected to a gas supply source 81 via a gas supply line 82. The gas supply source 81 may be a tank that stores a high pressure gas containing carbon dioxide, or may be a pump or a compressor that pumps air. The gas containing carbon dioxide is introduced into the gas flow path 56 of the temperature adjustment panels 20A and 20B via the gas supply line 82 and the gas inflow port 57. The introduced gas is ejected from the plurality of ejection ports 38 toward the plant 2. Accordingly, photosynthesis of the plant 2 is promoted.

### (Third Embodiment)

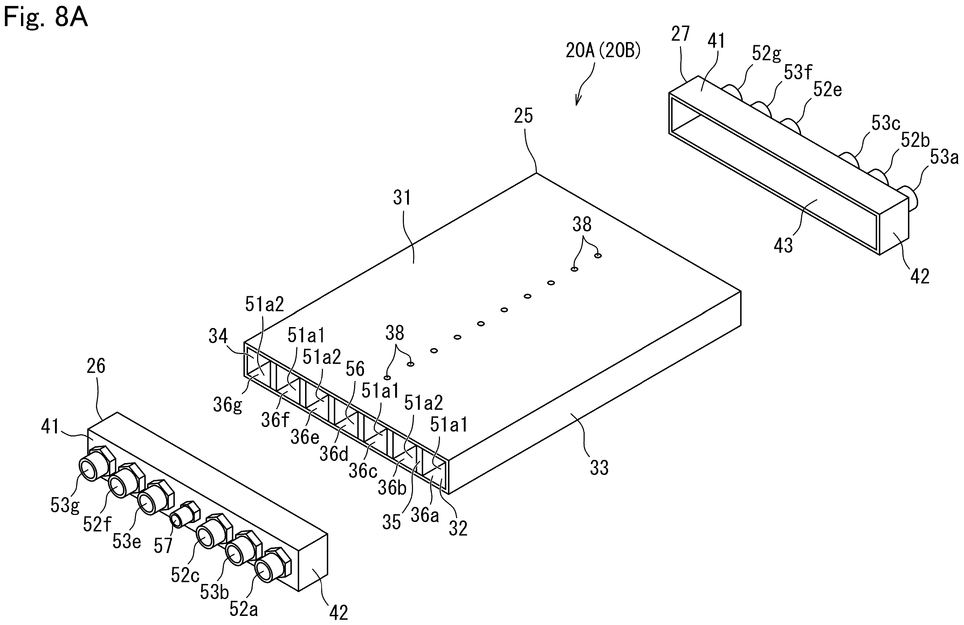

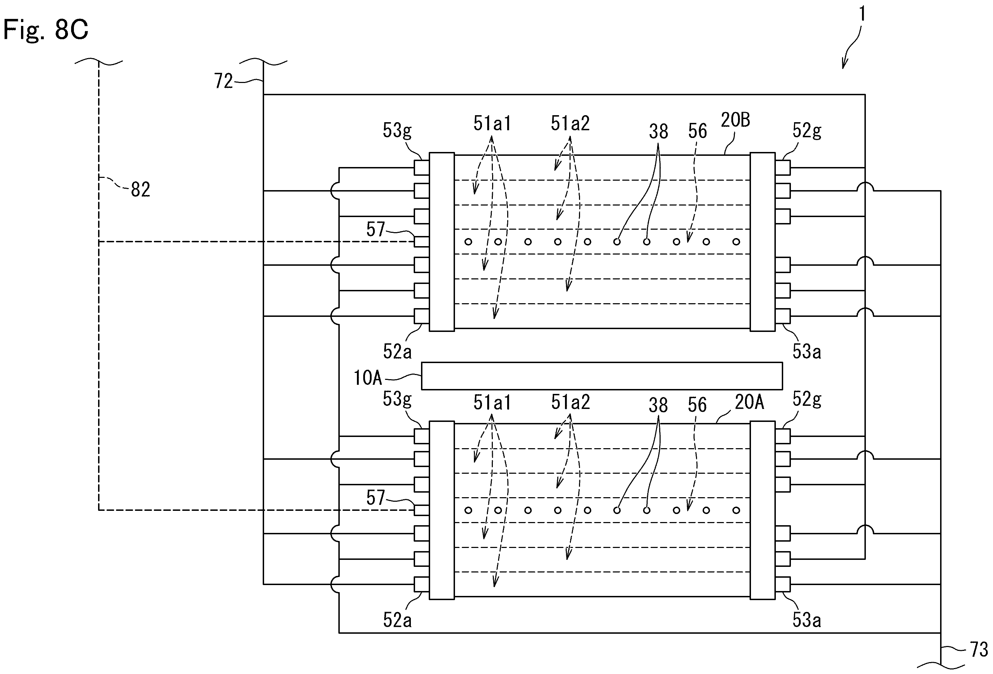

Next, a third embodiment of the present invention will be described with reference to Figs. 8A to 8C, focusing on differences from the above embodiment. Since the temperature adjustment panels 20A and 20B also have the same structure in the present embodiment, the description of the temperature adjustment panel 20B will be omitted.

In the present embodiment, as for all the partition walls 35, one end in the panel longitudinal direction is flush with an end surface of one end of the body 25, the end surface being brought into surface contact with the lid plate 41. Therefore, the body 25 has no portions corresponding to the communication portion 37 (see Figs. 3 and 5) in the first embodiment or the first side communication portion 37a and the second side communication portion 37b (see Figs. 7A and 7B) in the second embodiment. The same applies to the other end in the panel longitudinal direction.

When the pair of headers 26 and 27 are attached to the body 25, all the partition walls 35 abut on the inner surface of the lid plate 41. As a result, the seven long holes 36a to 36g are isolated from each other and constitute flow paths independent from each other.

The first header 26 is provided with three inflow ports 52a, 52c, and 52f, three outflow ports 53b, 53e, and 53 g, and one gas inflow port 57. The second header 27 is provided with three inflow ports 52b, 52e, and 52g and three outflow ports 53a, 53c, and 53f. As in the second embodiment, the gas inflow port 57 communicates with the long hole 36d, and the long hole 36d constitutes the gas flow path 56.

The long hole 36a communicates with the inflow port 52a and the outflow port 52b. The long hole 36a constitutes a first individual heat medium flow path 51a1 through which the heat medium flows from a first side to a second side in the panel longitudinal direction. The long hole 36b communicates with the inflow port 52b and the outflow port 53b. The long hole 36b constitutes a second individual heat medium flow path 51a2 through which the heat medium flows from the second side to the first side in the panel longitudinal direction. The long holes 36c and 36f constitute the first individual heat medium flow path 51a1. The long holes 36d and 36g constitute the second individual heat medium flow path 51a2. The first individual heat medium flow paths 51a1 and the second individual heat medium flow paths 51a2 are alternately arranged in the panel width direction.

While the heat medium flows through the individual heat medium flow path, there is a possibility that the temperature of the heat medium changes due to heat exchange with internal air of the agricultural house 100. In the present embodiment, since the first individual heat medium flow path 51a1 through which the heat medium flows from the first side to the second side and the second individual heat medium flow path 51a2 through which the heat medium flows from the second side to the first side are mixed in the temperature adjustment panels 20A and 20B, the temperature around the first side of the temperature adjustment panel 20A and the temperature around the second side can be made uniform. Since the first individual heat medium flow paths 51a1 and the second individual heat medium flow paths 51a2 are alternately arranged, the temperature can be also made uniform in the vertical direction.

### (Fourth Embodiment)

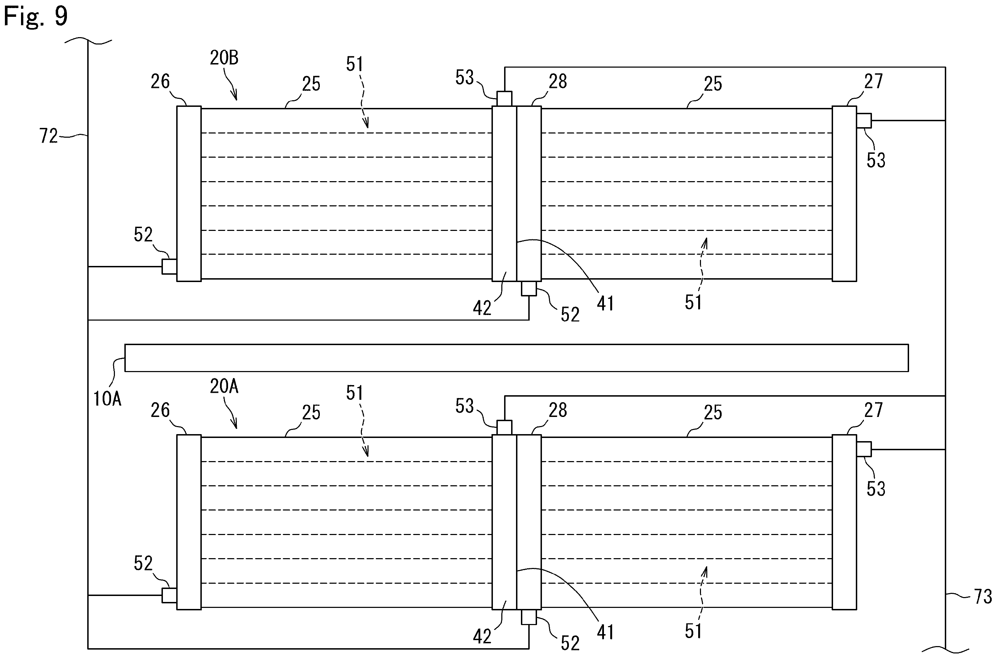

Next, a fourth embodiment of the present invention will be described with reference to Fig. 9, focusing on differences from the above embodiment. Since the temperature adjustment panels 20A and 20B also have the same structure in the present embodiment, the description of the temperature adjustment panel 20B will be omitted.

The temperature adjustment panel 20A may include a plurality of bodies 25 arranged in the panel longitudinal direction. In this case, the temperature adjustment panel 20A includes one or more intermediate headers 28 that connect the bodies 25. In the illustrated example, since the number of the bodies 25 is two, the number of the intermediate headers 28 is one. However, if the number of the bodies 25 is three or more, a plurality of the intermediate headers 28 is provided on the temperature adjustment panel 20A. The intermediate header 28 has a shape in which the lid plate 41 of the second header 27 and the lid plate 41 of the first header 26 are bonded back to back. The first side in the panel longitudinal direction has an equal structure to the second header 27, and the second side in the panel longitudinal direction has an equal structure to the first header 26. The inflow port 52 and the outflow port 53 are provided in the peripheral wall 42 instead of the lid plate 41.

Therefore, even when cultivation beds 10A, 10B, and 10C are long in the bed longitudinal direction, long temperature adjustment panels 20A and 20B can be provided accordingly.

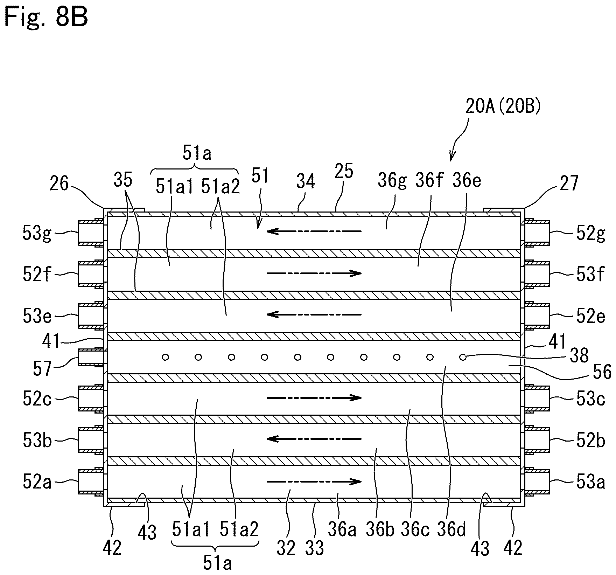

In the illustrated example, the gas flow paths 56 (see Figs. 7A and 8A) according to the second and third embodiments are not provided, but the gas flow path 56 can also be applied in the present embodiment. In the illustrated example, all of the individual heat medium flow paths 51a allow the heat medium to flow from the first side to the second side. However, in the present embodiment, the first individual heat medium flow path 51a1 and the second individual heat medium flow path 51a2 (see Fig. 8B) may be also set.

### (Fifth Embodiment)

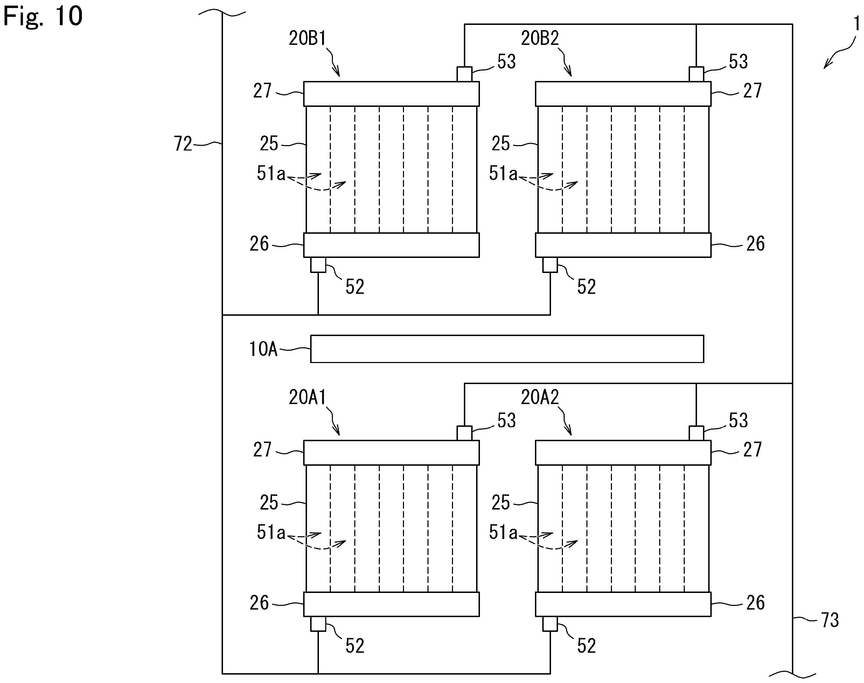

Next, a fifth embodiment of the present invention will be described with reference to Fig. 10, focusing on differences from the above embodiment. Since the temperature adjustment panels 20A and 20B also have the same structure in the present embodiment, the description of the temperature adjustment panel 20B will be omitted.

In the present exemplary embodiment, one row of temperature adjustment panels 20A adjacent to cultivation bed 10A is configured by arranging a plurality of temperature adjustment panels 20A1 and 20A2 in the bed longitudinal direction. As a result, as in the fourth embodiment, it is possible to provide the long temperature adjustment panel 20A in accordance with the long cultivation beds 10A, 10B, and 10C.

In the present embodiment, the individual heat medium flow paths 51a in the temperature adjustment panels 20A1 and 20A2 are oriented in an up-down direction. As a result, the temperature around the first side and the temperature around the second side of the temperature adjustment panel 20A can be made uniform. All the individual heat medium flow paths 51a allow the heat medium to flow upward from below. It is therefore possible to suppress accumulation of air in the heat medium flow path 51.

In the illustrated example, when one row of the temperature adjustment panel 20A is divided into the plurality of panels 20A1 and 20A2, the individual heat medium flow path 51a is oriented in the vertical direction. Alternatively, the individual heat medium flow path 51a may be oriented in the bed longitudinal direction as in the first to fourth embodiments.

In the illustrated example, when one row of the temperature adjustment panel 20A is divided into the plurality of panels, the individual heat medium flow path 51a is oriented in the vertical direction. Alternatively, the individual heat medium flow path 51a may be oriented in the bed longitudinal direction as in the first to fourth embodiments. In the present embodiment, the gas flow path 56 (see Figs. 7A and 8A) can be also applied, and the first individual heat medium flow path 51a1 and the second individual heat medium flow path 51a2 (see Fig. 8B) can be set.

### (Sixth Embodiment)

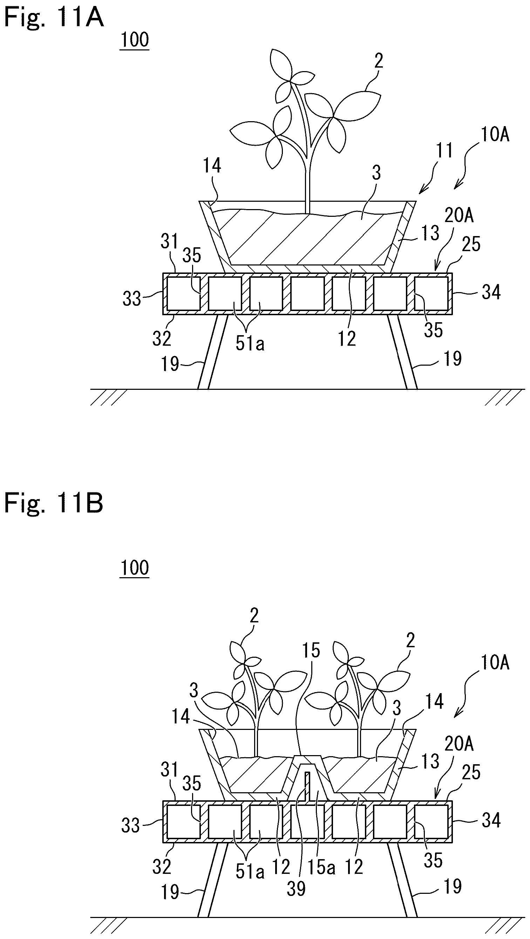

Next, a sixth embodiment of the present invention will be described with reference to Fig. 11A, focusing on differences from the above embodiment.

Although the temperature adjustment panel 20A is disposed adjacent to the cultivation bed 10A in the above embodiment, a temperature adjustment panel 120A constitutes a part of the cultivation bed 10A in the sixth to twentieth embodiments.

In the present embodiment, the temperature adjustment panel 20A constitutes a bottom of the cultivation bed 10A. The temperature adjustment panel 20A is supported on the site of the agricultural house 100 with the leg 19 interposed therebetween in such an orientation that the pair of main walls 31 and 32 face upward or downward. The container 11 of the cultivation bed 10A is placed on an upper surface of the main wall 31. In this manner, the temperature adjustment panel 20A functions as a pedestal on which the container 11 is placed.

As a result, the temperature of the bottom wall 12 of the container 11 is adjusted by solid thermal conductivity. The temperature of the peripheral wall 13 of the container 11 is also adjusted by the temperature adjustment panel 20A. It is therefore possible to widely adjust the temperature of the culture medium 3 received in the container 11.

### (Seventh Embodiment)

Next, a seventh embodiment of the present invention will be described with reference to Fig. 11B, focusing on differences from the above embodiment.

In the present embodiment, the container 11 has a W-shaped section as a whole, and has an inverted V-shaped partition wall portion 15 at a center in a width direction. Two receivers 14 are arranged in the width direction with the partition wall portion 15 interposed therebetween. The culture mediums 3 are respectively received by the two receivers 14. As in the sixth embodiment, the temperature adjustment panel 20A functions as a pedestal on which the container 11 is placed.

The partition wall portion 15 has a recess 15a facing upward from a lower surface. The temperature adjustment panel 20A has a fin 39 protruding from the main wall 31, and the fin 39 is inserted into the recess 15a. Accordingly, even when the container 11 has the partition wall portion 15, the temperature of the partition wall portion 15 can be adjusted by the fins 39.

### (Eighth Embodiment)

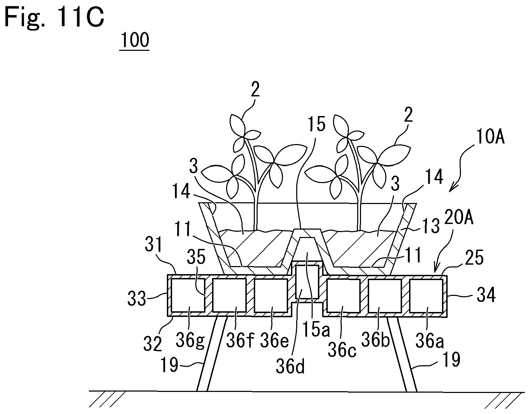

Next, an eighth embodiment of the present invention will be described with reference to Fig. 11C, focusing on differences from the above embodiment.

In the above embodiment, the long holes 36a to 36g are arranged in a straight linear shape in the panel width direction. However, in the present embodiment, the central long hole 36d is offset in the thickness direction from the other long holes 36a to 36c and 36e to 36g. Therefore, the main walls 31 and 32 are not flat, and are stepped in the thickness direction at a portion defining the long hole 36d. This configuration allows a stepped portion to enter the recess 15a. Therefore, as in the sixth embodiment, the temperature of the partition wall portion 15 can be adjusted.

### (Ninth Embodiment)

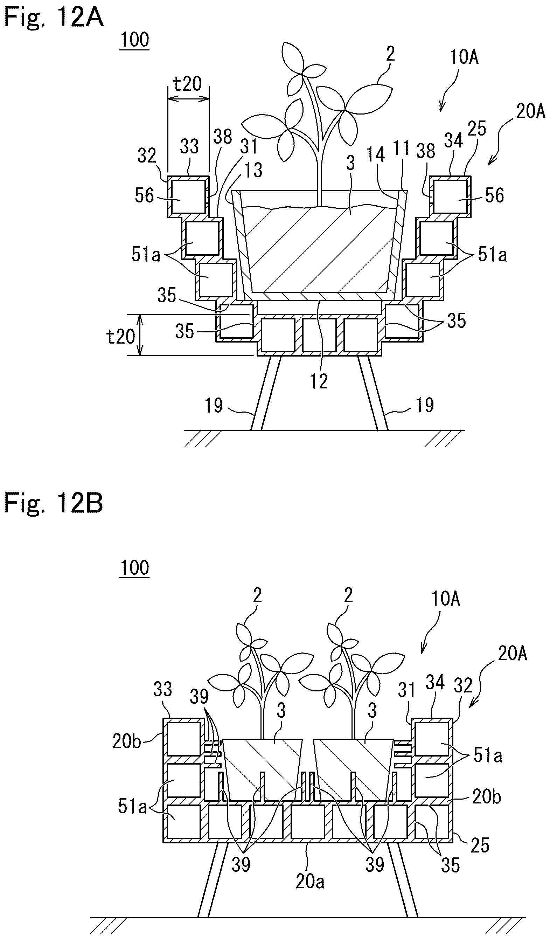

Next, a ninth embodiment of the present invention will be described with reference to Fig. 12A, focusing on differences from the above embodiment.

The temperature adjustment panel 20A has a U-shaped section and is supported on the site of the agricultural house 100 with the leg 19 interposed therebetween. In the cross section, the contours of the outer surfaces of the pair of main walls 31 and 32 are not a straight linear shape or an elongated rectangular shape as in the first to seventh embodiments. The contour may protrude downward, may be curved, or may be configured by a plurality of steps as in the illustrated example. In the present embodiment, the contours are also long with respect to the wall thickness t20. The cultivation bed 10A is received in the temperature adjustment panel 20A. As a result, not only the bottom wall 12 of the container 11 but also the peripheral wall 13 faces the outer surface of the main wall 31 in the bed width direction. Therefore, the temperature of the culture medium 3 can be more easily adjusted than in the sixth embodiment.

### (Tenth Embodiment)

Next, a tenth embodiment of the present invention will be described with reference to Fig. 12B, focusing on differences from the above embodiment.

The temperature adjustment panel 20A has a U-shaped section, and includes a bottom wall portion 20a and a pair of side wall portions 20b protruding upward from both ends of the bottom wall portion 20a. The temperature adjustment panel 20A includes a plurality of fins 39 protruding from inner peripheral surfaces of the bottom wall portion 20a and the side wall portion 20b.

The culture medium 3 is, for example, rock wool. Unlike soil and a culture solution, rock wool has a high ability to hold its own shape without losing the shape, and the cultivation bed 10A is not required to include the container 11 as in the above embodiment. The fins 39 contribute to stability of a position of such bare rock wool with respect to the temperature adjustment panel 20A. That is, the fins 39 protruding from the inner surface of the side wall portion 20b can stabilize the position of the rock wool in the panel width direction, and some of the fins 39 protruding from the inner surface of the bottom wall portion 20a can also stabilize the position of the rock wool in the panel width direction. Some of the fins 39 protruding from the inner surface of the bottom wall portion 20a may be pierced by the rock wool from below, and thus, the position of the rock wool with respect to the temperature adjustment panel 20A can be more stabilized.

Since the side wall portion surrounds the culture medium 3, the temperature of the culture medium 3 can be easily adjusted. Since the fins 39 are in proximity to, in contact with, or immersed in the rock wool, the temperature of the culture medium 3 can be further easily adjusted.

### (Eleventh Embodiment)

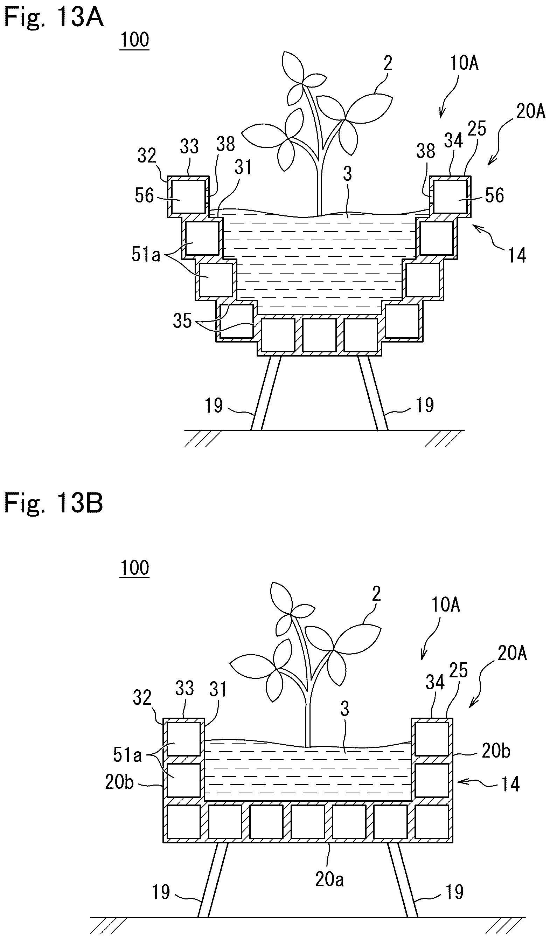

Next, an eleventh embodiment of the present invention will be described with reference to Fig. 13A, focusing on differences from the above embodiment.

In the present embodiment, the structure of the cross section of the temperature adjustment panel 20A is the same as in the ninth embodiment (see Fig. 12A). The culture solution is adopted as the culture medium 3, and the temperature adjustment panel 20A functions as the receiver 14 that receives the culture medium 3 in a liquid state rather than the function as the pedestal that supports the container 11.

In this case, although not shown in detail, the headers 26 and 27 of the temperature adjustment panel 20A also have a blocking plate that blocks a longitudinal end of the receiver 14 in order to prevent the culture solution from leaking out. In order to manage a water quality and temperature of the culture solution, a system for circulating the culture solution is added to the temperature adjustment system 1.

In the present embodiment, the temperature of the culture medium 3 can be also adjusted. Surface treatment or the like for preventing corrosion may be added to the outer surface of the main wall 31 facing the culture medium 3. As a result, the temperature adjustment panel 20A can be prevented from corroding in the culture medium 3, and the material of the temperature adjustment panel 20A can be prevented from eluting into the culture medium 3.

The body 25 of the temperature adjustment panel 20A includes an extruded material having a large number of long holes. A liquid level of the culture medium 3 is substantially at the same height as the partition wall defining the pair of long holes disposed at an upper end. Therefore, the long holes at the upper end constitute the gas flow path 56, and the remaining long holes disposed below the gas flow path constitute the individual heat medium flow path 51a. It is therefore possible to simultaneously promote photosynthesis with the gas ejected to the plant 2 and adjust the temperature of the culture medium 3 in a liquid state.

### (Twelfth Embodiment)

Next, a twelfth embodiment of the present invention will be described with reference to Fig. 13B, focusing on differences from the above embodiment.

In the present embodiment, the structure of the cross section of the temperature adjustment panel 20A is the same as in the tenth embodiment (see Fig. 12B). As in the case of the eleventh embodiment, a culture solution is adopted as the culture medium 3. The bottom wall portion 20a and the pair of side wall portions 20b function as the receiver 14 that receives the culture medium 3. It is therefore possible to adjust the temperature of the culture medium 3 in a liquid state as in the tenth embodiment and the eleventh embodiment.

### (Thirteenth Embodiment)

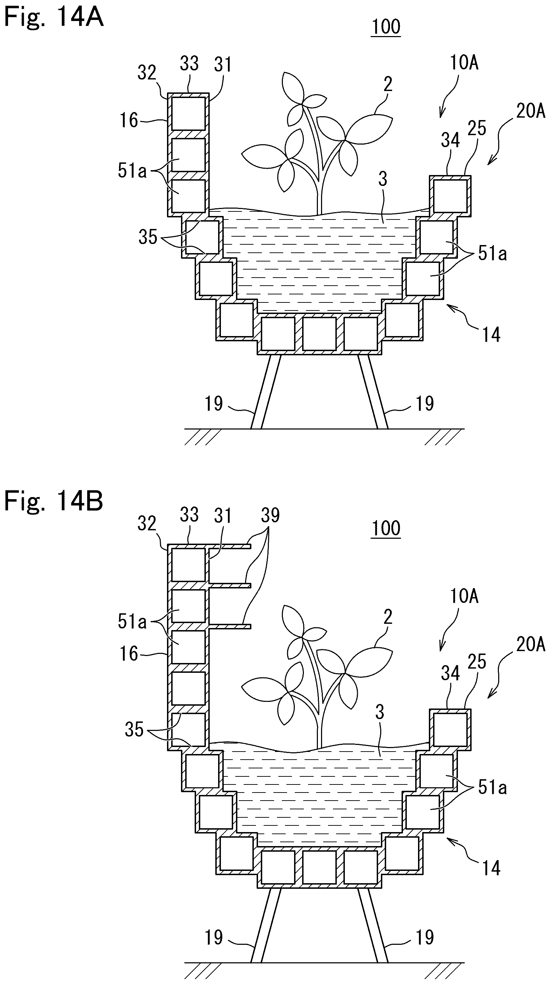

Next, a thirteenth embodiment of the present invention will be described with reference to Fig. 14A, focusing on differences from the above embodiment.

In the present embodiment, as in the tenth embodiment, the culture medium 3 as a culture solution is also received in the temperature adjustment panel 20A. The temperature adjustment panel 20A includes the receiver 14 having a U-shaped section that receives the culture medium 3 and a vertical wall portion 16 extended upward from one upper end of the receiver 14, and has a J-shaped section as a whole. The vertical wall portion 16 faces the plant 2 extending upward from the culture medium 3 in proximity to the plant 2. As a result, the temperature of the culture medium 3 in a liquid state can be adjusted by the receiver 14, and the temperature around the plant 2 extending upward from the culture medium 3 can be adjusted by the vertical wall portion 16. The growth of the plant 2 cultivated in the culture solution can be further promoted.

### (Fourteenth Embodiment)

Next, a fourteenth embodiment of the present invention will be described with reference to Fig. 14B, focusing on differences from the above embodiment.

In the present embodiment, as in the thirteenth embodiment, the temperature adjustment panel 20A includes the receiver 14 and the vertical wall portion 16. The temperature adjustment panel 20A includes the fins 39 protruding from an inner surface of the vertical wall portion 16 (a surface facing the plant 2). This configuration makes it easier to adjust the temperature around the plant 2.

### (Fifteenth Embodiment)

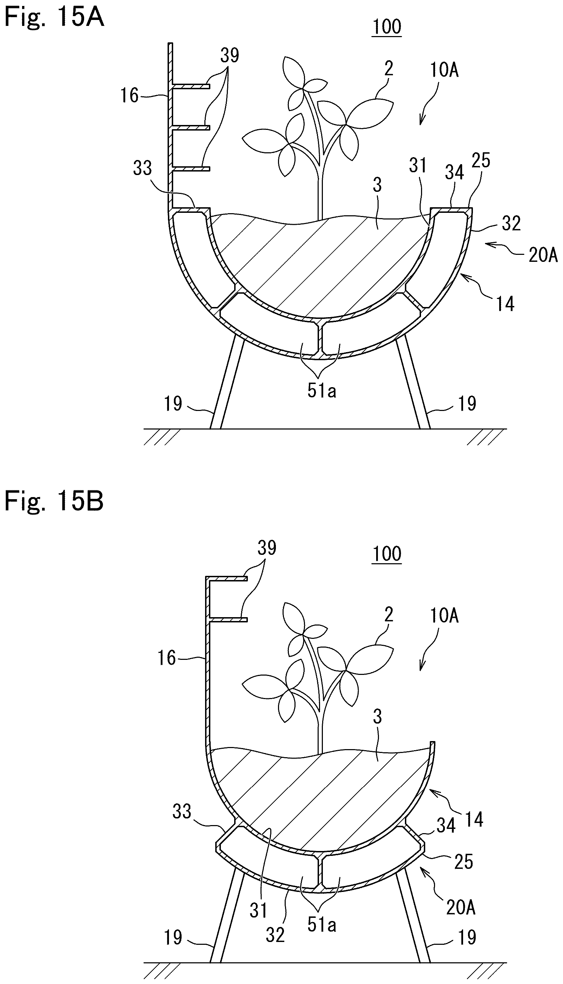

Next, a fifteenth embodiment of the present invention will be described with reference to Fig. 15A, focusing on differences from the above embodiment.

In the present embodiment, as in the fourteenth embodiment, the temperature adjustment panel 20A includes the receiver 14, the vertical wall portion 16, and the fin 39. The receiver 14 forms the individual heat medium flow path 51a, but the vertical wall portion 16 does not have a hollow structure and has a plate shape. The fin 39 protrudes from such a vertical wall portion 16. In the present embodiment, it is also easy to adjust the temperature around the culture medium 3 and the plant 2. The culture medium 3 may be soil or a culture solution.

### (Sixteenth Embodiment)

Next, a sixteenth embodiment of the present invention will be described with reference to Fig. 15B, focusing on differences from the above embodiment.

In the present embodiment, as in the fifteenth embodiment, the temperature adjustment panel 20A includes the receiver 14, the vertical wall portion 16, and the fin 39. The receiver 14 forms an individual heat medium flow path 51a at a center of the receiver, and has a plate shape at both ends in the width direction. In the present embodiment, it is also easy to adjust the temperature around the culture medium 3 and the plant 2. The culture medium 3 may be soil or a culture solution.

### (Seventeenth Embodiment)

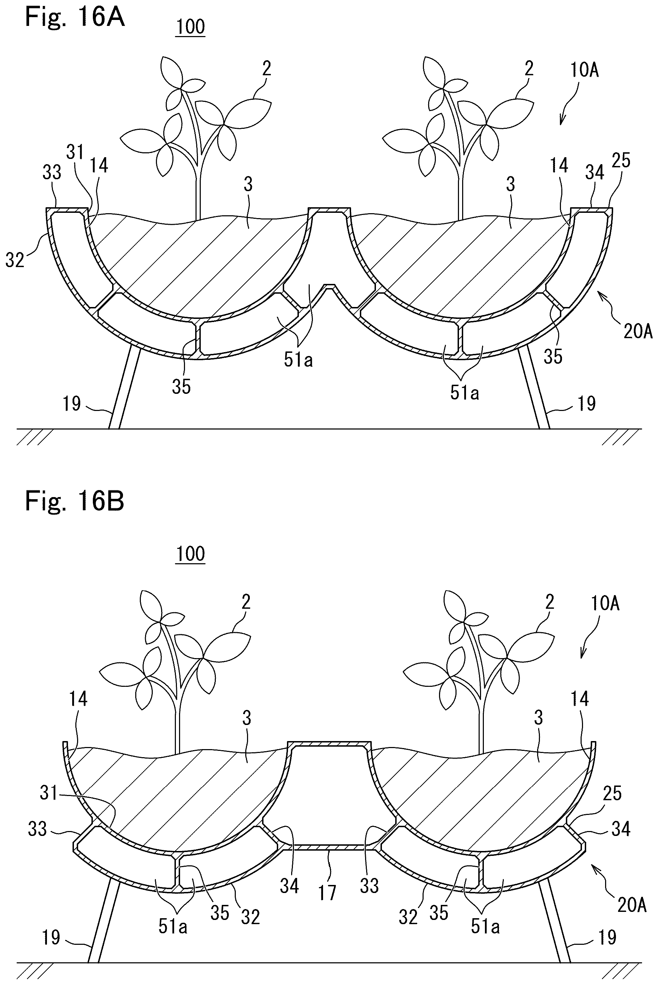

Next, a seventeenth embodiment of the present invention will be described with reference to Fig. 16A, focusing on differences from the above embodiment.

As in the eleventh embodiment or the twelfth embodiment, the temperature adjustment panel 20A has the receiver 14 that receives the culture medium 3. In the present embodiment, the receivers 14 become a pair in the width direction. The pair of receivers 14 are linked and integrated in the width direction. This makes it easy to increase a cultivated area in the agricultural house 100 while adopting a configuration in which the temperature of the culture medium 3 can be adjusted.

### (Eighteenth Embodiment)

Next, an eighteenth embodiment of the present invention will be described with reference to Fig. 16B, focusing on differences from the above embodiment.

The temperature adjustment panel 20A has a pair of receivers 14 as in the seventeenth embodiment. Both ends of each of the receivers 14 in the width direction have a plate shape as in the sixteenth embodiment. In the present embodiment, a connecting wall 17 that connects the central portions of the receivers 14 in the up-down direction is provided. As a result, in a region between the pair of receivers 14, a sectional coefficient increases, and strength can be secured.

### (Nineteenth Embodiment)

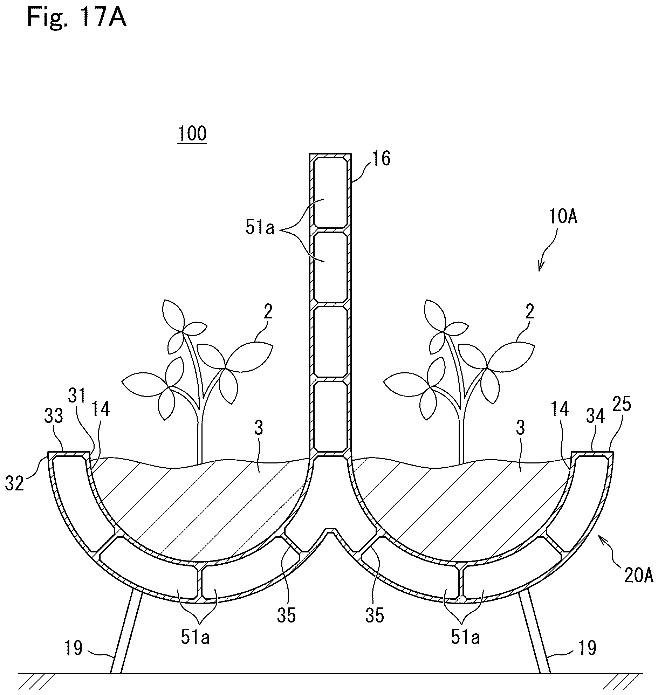

Next, a nineteenth embodiment of the present invention will be described with reference to Fig. 17A, focusing on differences from the above embodiment.

The temperature adjustment panel 20A has a pair of receivers 14 as in the seventeenth embodiment. The temperature adjustment panel 20A further includes a vertical wall portion 16 protruding upward from a connection portion of the pair of receivers 14. As a result, the temperature around the plant 2 planted in the culture medium 3 in each of the pair of receivers 14 can be adjusted.

### (Twentieth Embodiment)

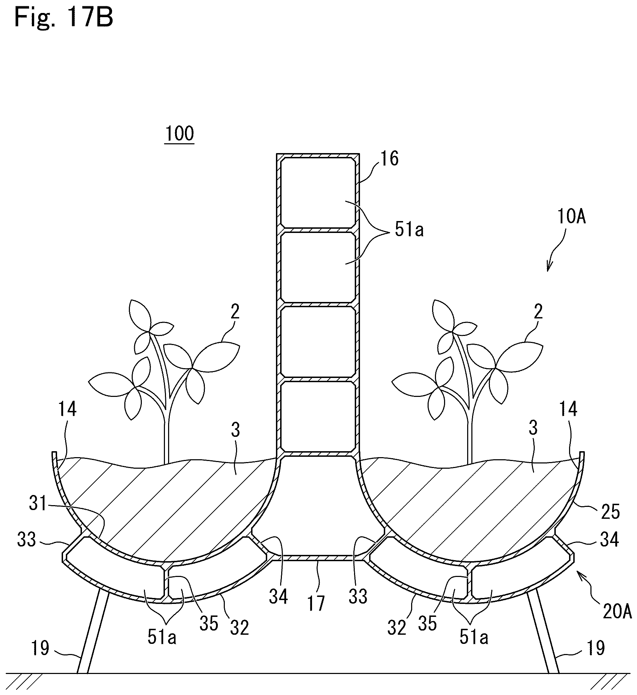

Next, a twentieth embodiment of the present invention will be described with reference to Fig. 17B, focusing on differences from the above embodiment.

The temperature adjustment panel 20A has a pair of receivers 14 as in the eighteenth embodiment, and has a vertical wall portion 16 as in the nineteenth embodiment. In the present embodiment, the temperature around the plant 2 can be also adjusted as in the nineteenth embodiment.

Although the embodiments of the present invention have been described so far, the above configuration can be appropriately added, changed, or deleted within the scope of the gist of the present invention.

For example, a method of molding the body 25 is not limited. In the present embodiment, the body 25 includes an extruded material as an example, but may be configured as a single plate by roll forming. By using extrusion molding, the body 25 having the above structure can be easily manufactured.

The tank may be divided into a tank for a heated high-temperature heat medium and a tank for a cooled low-temperature heat medium. A pump can be added as appropriate to ensure the required pressure. Cooling is only required to be performed by using the ground, and ground water (well water) may be used for the heat medium. In a case where a flow path of the heat medium is formed inside the column of the agricultural house 100, a portion of the column embedded in the ground may constitute the cooling line.

The present disclosure can include the following aspects.

### (First Aspect)

A temperature adjustment system for plant growth assists growth of a plant to be planted in a culture medium, the system including
one or more rows of cultivation beds that are elongated and configured to receive the culture medium, and
a temperature adjustment panel that has a panel shape with a wall thickness and in which a heat medium flow path is formed, through the heat medium flow path a heat medium flowing, the heat medium having a temperature higher or lower than an environmental temperature, wherein
the temperature adjustment panel has a pair of main walls facing each other in a thickness direction of the temperature adjustment panel, the pair of main walls form a contour longer than the wall thickness in a cross section, and the heat medium flow path is defined by the pair of main walls, and
the temperature adjustment panel extends along a bed longitudinal direction of the cultivation beds, and an outer surface of at least one of the pair of main walls is disposed in proximity to the culture medium or the plant.

### (Second Aspect)

The temperature adjustment system for plant growth according to the first aspect, wherein
the one or more rows of cultivation beds include a plurality of rows of the cultivation beds,
the temperature adjustment panel is disposed between two rows of cultivation beds adjacent to each other in a bed width direction among the plurality of rows of cultivation beds, or one row of the cultivation beds is disposed between two of the temperature adjustment panels in the bed width direction, and
the thickness direction of the temperature adjustment panel is oriented in the bed width direction, and the pair of main walls extend in the bed longitudinal direction and a vertical direction.

### (Third Aspect)

The temperature adjustment system for plant growth according to the second aspect, wherein
the outer surface of the at least one of the pair of main walls has light diffusivity or light reflectivity.

### (Fourth Aspect)

The temperature adjustment system for plant growth according to any of the first to third aspects, wherein
the temperature adjustment panel constitutes a bottom of the cultivation beds.

### (Fifth Aspect)

The temperature adjustment system for plant growth according to the fourth aspect, wherein
the temperature adjustment panel includes a receiver configured to receive the culture medium in a liquid state.

### (Sixth Aspect)

The temperature adjustment system for plant growth according to the fifth aspect, wherein
the temperature adjustment panel has a vertical wall portion extending upward from one end of the receiver and being in proximity to the plant.

### (Seventh aspect)

The temperature adjustment system for plant growth according to any one of the first to sixth aspects, wherein
the temperature adjustment panel includes a gas flow path that is provided independently of the heat medium flow path and through which a gas containing carbon dioxide flows, and
the outer surface of the at least one of the pair of main walls is provided with an ejection port ejecting the gas in the gas flow path toward the plant.

### (Eighth Aspect)

The temperature adjustment system for plant growth according to any of the first to seventh aspects, wherein
the temperature adjustment panel forms a plurality of the heat medium flow paths extending in parallel to each other.

### (Ninth Aspect)

The temperature adjustment system for plant growth according to the eighth aspect, wherein
the plurality of heat medium flow paths are arranged between the pair of main walls along the contour of the cross section of the main walls.

### (Tenth Aspect)

The temperature adjustment system for plant growth according to the eighth aspect, wherein
the plurality of heat medium flow paths extend in the bed longitudinal direction.

### (Eleventh Aspect)

The temperature adjustment system for plant growth according to the tenth aspect, wherein
the plurality of heat medium flow paths include:
one or more first heat medium flow paths through which the heat medium flows in one direction: and
one or more second heat medium flow paths through which the heat medium flows in a direction opposite to the one direction.

### (Twelfth Aspect)

The temperature adjustment system for plant growth according to the eleventh aspect, wherein
the first heat medium flow paths and the second heat medium flow paths are alternately arranged along the cross section of the pair of main walls.

### (Thirteenth Aspect)

The temperature adjustment system for plant growth according to the eighth aspect, wherein
the plurality of heat medium flow paths extend in a direction transverse to the bed longitudinal direction.

### (Fourteenth Aspect)

The temperature adjustment system for plant growth according to any of first to thirteenth aspects, wherein
the temperature adjustment panel includes a body having a hollow portion constituting the heat medium flow path, the body being formed by using an extruded material.

### (Fifteenth Aspect)

The temperature adjustment system for plant growth according to the fourteenth aspect, wherein
the temperature adjustment panel further includes a pair of headers that close an opening of the hollow portion at each of both ends of the extruded material, and
the pair of headers are provided with:
   an inflow port that allows the heat medium to flow into the heat medium flow path; and
   an outflow port that allows the heat medium to flow out from the heat medium flow path.

### (Sixteenth Aspect)

A temperature adjustment panel for plant growth assists growth of a plant to be planted in a culture medium received by one or more rows of cultivation beds extending in a bed longitudinal direction, the temperature adjustment panel including
a body that has a panel shape with a wall thickness and in which a heat medium flow path is provided, through the heat medium flow path a heat medium flowing, the heat medium having a temperature higher or lower than an environmental temperature, wherein
the body constitutes a bottom of the cultivation beds, and an outer surface of one of a pair of main walls constitutes an inner bottom surface of the cultivation beds.

This application claims priority based on Japanese Patent Application No. 2022-147042 filed on September 15, 2022. Japanese Patent Application No. 2022-147042 is incorporated herein by reference.

### REFERENCE SIGNS LIST

- 1: temperature adjustment system
- 2: plant
- 3: culture medium
- 10A, 10B, 10C: cultivation bed
- 20A, 20B: temperature adjustment panel
- 14: receiver
- 16: vertical wall portion
- 21: heat medium flow path
- 25: body
- 26, 27: header
- 31, 32: main wall
- 33, 34: end wall
- 35: partition wall
- 38: ejection port
- 51: heat medium flow path
- 51a: individual heat medium flow path
- 51a1: first individual heat medium flow path
- 51a2: second individual heat medium flow path
- 52: inflow port
- 53: outflow port
- 56: gas flow path

## Claims

1. A temperature adjustment system for plant growth, the system assisting growth of a plant to be planted in a culture medium, the system comprising:
one or more rows of cultivation beds that are elongated and configured to receive the culture medium; and
a temperature adjustment panel that has a panel shape with a wall thickness and in which a heat medium flow path is formed, through the heat medium flow path a heat medium flowing, the heat medium having a temperature higher or lower than an environmental temperature, wherein
the temperature adjustment panel has a pair of main walls facing each other in a thickness direction of the temperature adjustment panel, the pair of main walls form a contour longer than the wall thickness in a cross section, and the heat medium flow path is defined by the pair of main walls, and
the temperature adjustment panel extends along a bed longitudinal direction of the cultivation beds, and an outer surface of at least one of the pair of main walls is disposed in proximity to the culture medium or the plant.

2. The temperature adjustment system for plant growth according to claim 1, wherein
the one or more rows of cultivation beds include a plurality of rows of the cultivation beds,
the temperature adjustment panel is disposed between two rows of cultivation beds adjacent to each other in a bed width direction among the plurality of rows of cultivation beds, or one row of the cultivation beds is disposed between two of the temperature adjustment panels in the bed width direction, and
the thickness direction of the temperature adjustment panel is oriented in the bed width direction, and the pair of main walls extend in the bed longitudinal direction and a vertical direction.

3. The temperature adjustment system for plant growth according to claim 2, wherein
the outer surface of the at least one of the pair of main walls has light diffusivity or light reflectivity.

4. The temperature adjustment system for plant growth according to claim 1, wherein
the temperature adjustment panel constitutes a bottom of the cultivation beds.

5. The temperature adjustment system for plant growth according to claim 4, wherein
the temperature adjustment panel includes a receiver configured to receive the culture medium in a liquid state.

6. The temperature adjustment system for plant growth according to claim 5, wherein
the temperature adjustment panel has a vertical wall portion extending upward from one end of the receiver and being in proximity to the plant.

7. The temperature adjustment system for plant growth according to claim 1, wherein
the temperature adjustment panel includes a gas flow path that is provided independently of the heat medium flow path and through which a gas containing carbon dioxide flows, and
the outer surface of the at least one of the pair of main walls is provided with an ejection port ejecting the gas in the gas flow path toward the plant.

8. The temperature adjustment system for plant growth according to any one of claims 1 to 7, wherein
the temperature adjustment panel forms a plurality of the heat medium flow paths extending in parallel to each other.

9. The temperature adjustment system for plant growth according to claim 8, wherein
the plurality of heat medium flow paths are arranged between the pair of main walls along the contour of the cross section of the main walls.

10. The temperature adjustment system for plant growth according to claim 8, wherein
the plurality of heat medium flow paths extend in the bed longitudinal direction.

11. The temperature adjustment system for plant growth according to claim 10, wherein
the plurality of heat medium flow paths include:
one or more first heat medium flow paths through which the heat medium flows in one direction; and
one or more second heat medium flow paths through which the heat medium flows in a direction opposite to the one direction.

12. The temperature adjustment system for plant growth according to claim 11, wherein
the first heat medium flow paths and the second heat medium flow paths are alternately arranged along the cross section of the pair of main walls.

13. The temperature adjustment system for plant growth according to claim 8, wherein
the plurality of heat medium flow paths extend in a direction transverse to the bed longitudinal direction.

14. The temperature adjustment system for plant growth according to any one of claims 1 to 7, wherein
the temperature adjustment panel includes a body having a hollow portion constituting the heat medium flow path, the body being formed by using an extruded material.

15. The temperature adjustment system for plant growth according to claim 14, wherein
the temperature adjustment panel further includes a pair of headers that close an opening of the hollow portion at each of both ends of the extruded material, and
the pair of headers are provided with:
an inflow port that allows the heat medium to flow into the heat medium flow path; and
an outflow port that allows the heat medium to flow out from the heat medium flow path.

16. A temperature adjustment panel for plant growth, the temperature adjustment panel assisting growth of a plant to be planted in a culture medium received by one or more rows of cultivation beds extending in a bed longitudinal direction, the temperature adjustment panel comprising
a body that has a panel shape with a wall thickness and in which a heat medium flow path is provided, through the heat medium flow path a heat medium flowing, the heat medium having a temperature higher or lower than an environmental temperature, wherein
the body constitutes a bottom of the cultivation beds, and an outer surface of one of a pair of main walls constitutes an inner bottom surface of the cultivation beds.
